# FASCICULE DE BREVET EUROPEEN

(11) **EP 4 141 578 B1**
(45) Date de publication et mention de la délivrance du brevet: **02.04.2025**
(21) Numéro de dépôt: 21193817.0
(22) Date de dépôt: 30.08.2021
(51) Int. Cl.: G04B 13/02, F16H 49/00, H02K 49/10

(54) **MÉCANISME HORLOGER MUNI D'UN ENGRENAGE MAGNÉTIQUE**
UHRWERKSMECHANISMUS MIT EINEM MAGNETISCHEN GETRIEBERAD
TIMEPIECE MECHANISM PROVIDED WITH A MAGNETIC GEAR

(43) Date de publication de la demande: 01.03.2023
(73) Titulaire: The Swatch Group Research and Development Ltd, 2074 Marin (CH)
(72) Inventeur: IMBODEN, Matthias, 2072 St-Blaise (CH); MIGNOT, Jean-Pierre, 25300 Pontarlier (FR); CALIC, Milan, 1093 La Conversion (CH); NICOLAS, Cédric, 2000 Neuchâtel (CH); BORN, Jean-Jacques, 1110 Morges (CH)
(74) Mandataire: ICB SA

(56) Documents cités:
- FR-A- 1 584 453
- US-A- 3 400 287
- US-A- 5 633 555

## Description

### Domaine technique de l'invention

L'invention concerne le domaine des engrenages magnétiques formés d'une première roue et d'une deuxième roue en relation d'engrènement magnétique, la première roue étant munie de premiers pôles magnétiques permanents, agencés circulairement et définissant les dents aimantées d'une première denture magnétique.

En particulier, l'invention concerne un mécanisme, du type horloger, incorporant un tel engrenage magnétique.

### Arrière-plan technologique

Les engrenages magnétiques sont des dispositifs connus qui peuvent être utilisés pour transférer un couple mécanique entre deux pièces sans aucun contact direct entre les pièces, et donc sans provoquer d'usure ou de friction entre ces pièces. De tels engrenages procurent les avantages suivants :
- aucune huile ou lubrifiant n'est nécessaire car il n'y a pas d'usure mécanique sur les dents des pièces ;
- les pièces dentées peuvent interagir et transférer le couple et la puissance mécanique même si elles sont séparées hermétiquement ; et
- les pièces dentées peuvent être utilisées pour limiter le couple maximal, et peuvent ainsi aider à éviter des dommages par exemple lors d'un choc mécanique.

Un tel engrenage magnétique comporte typiquement deux roues en relation d'engrènement magnétique. Une première roue est munie de premiers pôles magnétiques permanents, qui sont typiquement alternés et agencés circulairement et définissent une première denture magnétique. Ces premiers pôles magnétiques sont par exemple définis par des aimants bipolaires ayant une aimantation radiale et alternée. Une deuxième roue est munie de dents en matériau ferromagnétique ou de deuxièmes pôles magnétiques permanents, ces dents ou deuxièmes pôles magnétiques étant agencés circulairement et définissant une deuxième denture magnétique. Les première et deuxième roues sont typiquement situées dans un même plan général. Le couplage magnétique entre les dentures des première et deuxième roues fait que lorsqu'une des première et deuxième roues est entraînée en rotation, l'autre roue est également entraînée en rotation.

Toutefois, un inconvénient de ce type d'engrenage magnétique est qu'il nécessite d'aimanter (par aimantation permanente) chaque dent au moins de la première roue, typiquement avec des polarités alternées, quelle que soit le diamètre et le nombre dents de la première denture. Cela a notamment deux conséquences importantes : d'une part un tel engrenage magnétique est coûteux à fabriquer ; et, d'autre part, alors que le nombre de dents de la première denture participant, à un instant donné, à l'interaction magnétique entre les deux roues est relativement faible, les autres aimants de la première denture circulaire vont engendrer des lignes de champ magnétique se propageant à travers le système contenant l'engrenage magnétique (typiquement un mécanisme horloger). Or, il est très difficile de contenir de telles lignes de champ magnétique afin de protéger les autres composants du mécanisme de l'effet induit par ces lignes de champ, en particulier une force d'attraction magnétique qui peut engendrer des contraintes mécaniques parasites pour certains éléments mobiles du mécanisme. Un tel effet peut être préjudiciable au bon fonctionnement du système, notamment lorsque ce dernier est un mouvement horloger comportant des mobiles en matériau magnétique.

Le document FR 1.584.453 concerne un échappement magnétique horloger. Dans un mode de réalisation, la roue d'échappement présente une denture ferromagnétique et le balancier est muni d'un aimant bipolaire. Un couplage magnétique est prévu entre l'aimant bipolaire et la denture ferromagnétique. Un aimant fixe maintient momentanément la roue d'échappement dans des positions angulaires données et un écran magnétique partiel est prévu entre l'aimant bipolaire et la denture magnétique pour que le mouvement oscillatoire du balancier soit transformé en un mouvement de rotation unidirectionnel de la roue d'échappement. Dans un autre mode de réalisation, le balancier est muni d'une dent à haute perméabilité magnétique et le couplage magnétique à la roue d'échappement est réalisé via un petit circuit magnétique fixe et comportant un aimant bipolaire.

### Résumé de l'invention

L'invention a donc pour objectif de pallier les inconvénients de l'art antérieur en procurant un mécanisme, du type horloger comprenant un engrenage magnétique qui soit simple et peu coûteux à fabriquer et qui permette de réduire le nombre de pôles magnétiques permanents nécessaires à l'engrenage magnétique tout en permettant de contenir les lignes de champ magnétique afin de protéger les différents autres composants d'un système contenant le mécanisme.

A cet effet, la présente invention concerne un mécanisme, du type horloger, comprenant un engrenage magnétique comportant une première roue et une deuxième roue, la première roue étant munie de pôles magnétiques permanents qui sont agencés de manière à former les dents aimantées d'une première denture magnétique desquelles sortent respectivement des premiers flux magnétiques ayant des polarités alternées. La deuxième roue est munie de dents en matériau ferromagnétique doux définissant une deuxième denture magnétique, cette deuxième denture magnétique ayant un nombre de dents supérieur à celui de la première denture magnétique et présentant un premier couplage magnétique avec cette première denture magnétique de sorte que, lorsqu'une des première et deuxième roues est entraînée en rotation, l'autre roue est également entraînée en rotation, avec un premier rapport de transmission défini par les première et deuxième dentures magnétiques, par ledit premier couplage magnétique qui est généré, au moins en majeure partie, par des flux magnétiques, parmi lesdits premiers flux magnétiques, polarisant momentanément, en attraction magnétique, des dents de la deuxième denture magnétique qui sont momentanément situées dans une zone de couplage magnétique avec la première denture magnétique et alors traversées respectivement par ces flux magnétiques. Selon l'invention, l'engrenage magnétique comprend en outre une troisième roue munie de dents en matériau ferromagnétique doux définissant une troisième denture magnétique ayant également un nombre de dents supérieur à celui de la première denture magnétique, la deuxième denture magnétique étant agencée sur une jante en matériau non magnétique avec des zones non magnétiques entre les dents de cette deuxième denture, la troisième roue étant disposée relativement à la deuxième roue de manière que la troisième denture magnétique présente un deuxième couplage magnétique, dans ladite zone de couplage magnétique, avec des dents momentanément magnétisées de la deuxième denture magnétique, de sorte que, lorsque l'une des deuxième et troisième roues est entraînée en rotation, l'autre roue est également entraînée en rotation, avec un deuxième rapport de transmission défini par les deuxième et troisième dentures magnétiques, par ledit deuxième couplage magnétique qui est généré, au moins en partie, par des deuxièmes flux magnétiques sortant respectivement desdites dents momentanément magnétisées de la deuxième denture magnétique avec des polarités alternées, ces deuxièmes flux magnétiques polarisant momentanément, en attraction magnétique, des dents de la troisième denture magnétique qui sont momentanément situées dans ladite zone de couplage magnétique et alors traversées respectivement par les deuxièmes flux magnétiques, cette zone de couplage magnétique définissant une zone d'engrènement magnétique pour les première, deuxième et troisième roues. Le matériau ferromagnétique doux est de préférence un matériau à haute perméabilité magnétique, donc à faible reluctance magnétique.

Un tel mécanisme à engrenage magnétique, ainsi configuré, produit une aimantation locale et temporaire uniquement sur les dents en matériau ferromagnétique doux de la deuxième denture et de la troisième denture qui sont situées dans la zone de couplage magnétique et qui sont actives à un instant donné. Le nombre de pôles magnétiques permanents de la première roue qui sont nécessaires pour générer une telle aimantation locale est par conséquent substantiellement réduit. Ceci permet de réduire les coûts et de simplifier la fabrication du mécanisme, ainsi que de contenir localement les lignes de champ magnétique à proximité de l'endroit où le transfert de couple se produit entre les deuxième et troisième roues. La présence de dents en matériau ferromagnétique doux sur les deuxième et troisième roues, avec l'agencement spécifique de la deuxième denture qui est formée de dents séparées l'une des autres et agencées sur un support non magnétique, permet de refermer les lignes du champ magnétique produit par les pôles magnétiques permanents de la première denture magnétique au travers des deuxième et troisième dentures magnétiques, ce qui permet d'engendrer le couplage magnétique entre les deuxième et troisième roues et ainsi l'engrènement magnétique de ces deux roues.

En particulier, les différents composants d'un système contenant le mécanisme, tel que par exemple un mouvement mécanique d'une pièce d'horlogerie, peuvent être mieux protégés du champ magnétique des aimants permanents, lesquels sont en nombre réduit et peuvent être ainsi confinés et, le cas échéant, plus aisément muni d'un blindage magnétique. En outre, un tel mécanisme selon l'invention procure une limitation intrinsèque du couple maximal transmis entre les deuxième et troisième roues, permettant ainsi de protéger l'engrenage des dommages produits par un choc mécanique.

De préférence, la première roue comporte au moins quatre dents aimantées. De manière générale, la première denture magnétique comprend N1 dents, la deuxième denture magnétique comprend N2 dents, et la troisième denture magnétique comprend N3 dents. Avantageusement, le nombre N1 est un nombre pair entre quatre et dix, y compris ; et le rapport entre le nombre N2 et le nombre N1 et le rapport entre le nombre N3 et le nombre N1 sont chacun supérieur ou égal à deux, de préférence supérieur ou égal à trois. Ceci permet d'améliorer l'efficacité du couplage magnétique entre les première, deuxième et troisième roues pour un nombre limité d'aimants.

Dans une variante générale, chacune des deuxième et troisième roues comporte au moins six dents qui s'étendent radialement par rapport à l'axe de rotation de la roue concernée. Chaque dent prend la forme d'une protrusion qui s'étend en saillie par rapport à un pourtour annulaire de la roue. En particulier, chacune des deuxième et troisième roues comporte entre six et trente dents qui s'étendent radialement par rapport à l'axe de rotation de la roue.

Selon une variante de réalisation particulière, la première roue est en outre couplée mécaniquement à la deuxième roue, notamment via un engrenage mécanique. Cette variante de réalisation particulière permet de garantir un alignement optimal, en permanence, entre les pôles magnétiques permanents de la première roue et les dents en matériau ferromagnétique doux de la deuxième roue, et d'imposer ainsi que la deuxième roue suive précisément le mouvement de rotation de la première roue, et vice versa.

Selon une a variante de réalisation particulière, la première roue est montée libre en rotation. Cette autre variante permet de générer le premier couplage magnétique sans aucun frottement entre la première roue et la deuxième roue.

Selon un mode de réalisation préférentiel de l'invention, la première roue est disposée, en projection dans un premier plan dans lequel s'étend la deuxième roue et perpendiculaire à l'axe de rotation de cette deuxième roue, à l'intérieur d'un cercle circonscrit à cette deuxième roue.

Selon une première variante du mode de réalisation préférentiel, la première roue est disposée sensiblement dans ledit premier plan, à l'intérieur de la deuxième roue qui présente dans ce premier plan une forme annulaire sans rayon, les dents aimantées de la première denture étant agencées de manière que les premiers flux magnétiques sortent de ces dents aimantées avec une direction principale radiale relativement à l'axe de rotation de la première roue.

Selon une deuxième variante du mode de réalisation préférentiel, la première roue est disposée hors du premier plan avec son axe de rotation agencé perpendiculairement à ce premier plan, les dents aimantées de la première denture étant agencées de manière que les premiers flux magnétiques sortent de ces dents aimantées avec une direction principale oblique ou parallèle à l'axe de rotation de la première roue (polarisation axiale).

Avantageusement, la première roue présente une partie centrale en matériau ferromagnétique, en périphérie de laquelle sont agencés ses dits pôles magnétiques permanents par paires avec respectivement autant de pôles magnétiques complémentaires, formant ainsi des aimants bipolaires présentant une polarisation radiale et définissant respectivement les dents aimantées de la première denture magnétique. Ceci permet de refermer efficacement les lignes des champs magnétiques entre aimants bipolaires adjacents via la partie centrale de la première roue.

Dans une variante avantageuse, les deuxième et troisième dentures magnétiques présentent des pas différents. A noter que le pas d'une denture est défini comme la longueur de l'arc de cercle entre deux dents adjacentes de cette denture sur un cercle de roulement avec une roue dentée engrenant avec cette denture. Ceci permet de compenser efficacement le décalage de rotation entre les deuxième et troisième roues, améliorant ainsi l'efficacité de l'engrenage magnétique. De préférence, en espaçant de manière optimale les dents de la deuxième roue et de la troisième roue, on obtient un transfert de couple optimal entre ces roues. Lorsque les deuxième et troisième roues sont de même diamètre, la deuxième roue peut ainsi comporter N2 dents et la troisième roue N3 dents, le nombre N3 de dents de la troisième roue étant supérieur au nombre N2 de dents de la deuxième roue.

Dans une variante particulière, le mécanisme comporte en outre un dispositif anti-retour couplé mécaniquement à la troisième roue. Ceci permet d'empêcher un glissement inverse des roues, qui peut notamment se produire en cas de couple de rappel élevé comme par exemple lors de l'enroulement d'un ressort moteur. Un tel glissement peut provoquer un effet d'emballement préjudiciable au mécanisme, au cours duquel la troisième roue vient à tourner librement dans la direction opposée à celle du transfert de couple souhaité. Un tel effet d'emballement peut par exemple être initié par une vibration, un choc, ou tout autre perturbation mécanique au sein du mécanisme en question (enroulement d'un ressort par exemple).

Avantageusement, la troisième roue comprend une jante, formant une base circulaire continue pour la troisième denture magnétique, qui est constituée d'un matériau ferromagnétique doux, de sorte à former une fermeture pour les chemins magnétiques des deuxièmes flux magnétiques engendrant le couplage magnétique entre les deuxième et troisième roues.

Selon un mode de réalisation avantageux de l'invention, l'engrenage magnétique comprend en outre une quatrième roue munie de pôles magnétiques permanents qui sont agencés de manière à former les dents aimantées d'une quatrième denture magnétique desquelles sortent respectivement des troisièmes flux magnétiques ayant des polarités alternées. Dans ce mode de réalisation avantageux, la troisième denture magnétique est agencée, comme la deuxième denture, sur une jante en matériau non magnétique avec des zones non magnétiques entre les dents de cette troisième denture. Ensuite, la quatrième roue est disposée, en projection dans un deuxième plan dans lequel s'étend la troisième roue et perpendiculaire à l'axe de rotation de cette troisième roue, à l'intérieur d'un cercle circonscrit à cette troisième roue. Les deuxième et troisième dentures magnétiques ont chacune un nombre de dents supérieur à celui de la quatrième denture magnétique, la troisième denture magnétique présentant en outre un troisième couplage magnétique avec cette quatrième denture magnétique, de sorte que, lorsqu'une des troisième et quatrième roues est entraînée en rotation, l'autre roue est également entraînée en rotation, avec un troisième rapport de transmission défini par les troisième et quatrième dentures magnétiques, par le troisième couplage magnétique qui est généré, en majeure partie, par des flux magnétiques, parmi lesdits troisièmes flux magnétiques, polarisant momentanément, en attraction magnétique, des dents de la troisième denture magnétique qui sont momentanément situées dans une zone de couplage magnétique avec la quatrième denture magnétique et alors traversées respectivement par ces flux magnétiques. La quatrième roue est agencée de manière que ladite zone de couplage magnétique avec la première roue et la zone de couplage magnétique avec cette quatrième roue se superposent au moins en majeure partie et que les deuxième et troisième flux magnétiques, qui alors traversent des dents de la troisième denture situées dans une zone de couplage magnétique commune aux première et quatrième roues, présentent une même polarité dans chacune de ces dents. Finalement, ledit deuxième couplage magnétique entre les deuxième et troisième dentures magnétiques est en outre généré en partie par des quatrièmes flux magnétiques sortant respectivement desdites dents de la troisième denture magnétique momentanément magnétisées par la quatrième denture magnétique, ces quatrièmes flux magnétiques polarisant en outre momentanément, en attraction magnétique, respectivement des dents de la deuxième denture magnétique qui sont momentanément situées dans ladite zone de couplage magnétique avec la quatrième roue.

Ce mode de réalisation avantageux permet d'améliorer l'efficacité du couplage magnétique entre les deuxième et troisième roues. L'engrenage magnétique peut ainsi être symétrique.

De préférence, la quatrième roue comporte au moins quatre dents aimantées. La quatrième denture magnétique comprend N4 dents et la troisième denture magnétique comprend N3 dents. Le nombre N4 est avantageusement un nombre pair entre quatre et dix, y compris ; et le rapport entre le nombre N3 et le nombre N4 est supérieur ou égal à deux, de préférence supérieur ou égal à trois.

Selon une première variante de réalisation, la quatrième roue est disposée sensiblement dans ledit deuxième plan, à l'intérieur de la troisième roue qui présente dans ce deuxième plan une forme annulaire sans rayon, les dents aimantées de la quatrième denture étant agencées de manière que les troisièmes flux magnétiques sortent de ces dents aimantées avec une direction principale radiale relativement à l'axe de rotation de la quatrième roue.

Selon une deuxième variante de réalisation, la quatrième roue est disposée hors dudit deuxième plan avec son axe de rotation agencé perpendiculairement à ce deuxième plan, les dents aimantées de la quatrième denture étant agencées de manière que les troisièmes flux magnétiques sortent de ces dents aimantées avec une direction principale oblique ou parallèle à l'axe de rotation de la quatrième roue (polarisation axiale).

Comme la première roue, dans le cas où la quatrième roue comprend une pluralité d'aimants bipolaires présentant une polarisation radiale, la quatrième roue présente avantageusement une partie centrale en matériau ferromagnétique, en périphérie de laquelle sont agencés ses pôles magnétiques permanents par paires avec respectivement autant de pôles magnétiques complémentaires, formant ainsi la pluralité d'aimants bipolaires qui définissent les dents aimantées de la quatrième denture magnétique. La quatrième roue est de préférence montée libre en rotation.

Selon un exemple de réalisation de l'invention, les deuxième et troisième roues sont coplanaires.

Selon un autre exemple de réalisation de l'invention, les deuxième et troisième roues s'étendent dans des plans distincts. Selon une première variante, ces plans distincts ne sont pas parallèles. Selon une autre variante, ces plans distincts sont parallèles, les deuxième et troisième dentures magnétiques étant avantageusement au moins partiellement superposées l'une à l'autre dans ladite zone de couplage magnétique avec la première denture magnétique.

### Brève description des figures

Les buts, avantages et caractéristiques du mécanisme selon l'invention apparaîtront mieux dans la description suivante de diverses formes d'exécution non limitatives, illustrées par les dessins dans lesquels :
- la figure 1 est une vue de dessus d'un mécanisme incorporant un engrenage magnétique selon une variante particulière l'invention ;
- la figure 2 est une vue de dessus, similaire à la figure 1, selon un premier exemple d'un premier mode de réalisation préférentiel du mécanisme de l'invention ;
- la figure 3 est une vue analogue à celle de la figure 2, selon un deuxième exemple du premier mode de réalisation du mécanisme de l'invention ;
- la figure 4 est une vue analogue à celle de la figure 2, selon un premier exemple d'un deuxième mode de réalisation avantageux du mécanisme de l'invention ;
- la figure 5 est une vue analogue à celle de la figure 4, selon un deuxième exemple du deuxième mode de réalisation du mécanisme de l'invention ;
- la figure 6 est une vue analogue à celle de la figure 3, selon un troisième exemple du premier mode de réalisation du mécanisme de l'invention, et dans laquelle le mécanisme de l'invention comporte un dispositif anti-retour couplé mécaniquement à une roue de l'engrenage magnétique ; et
- la figure 7 est une vue en perspective d'un exemple d'un troisième mode de réalisation particulier du mécanisme de l'invention.

### Description détaillée de l'invention

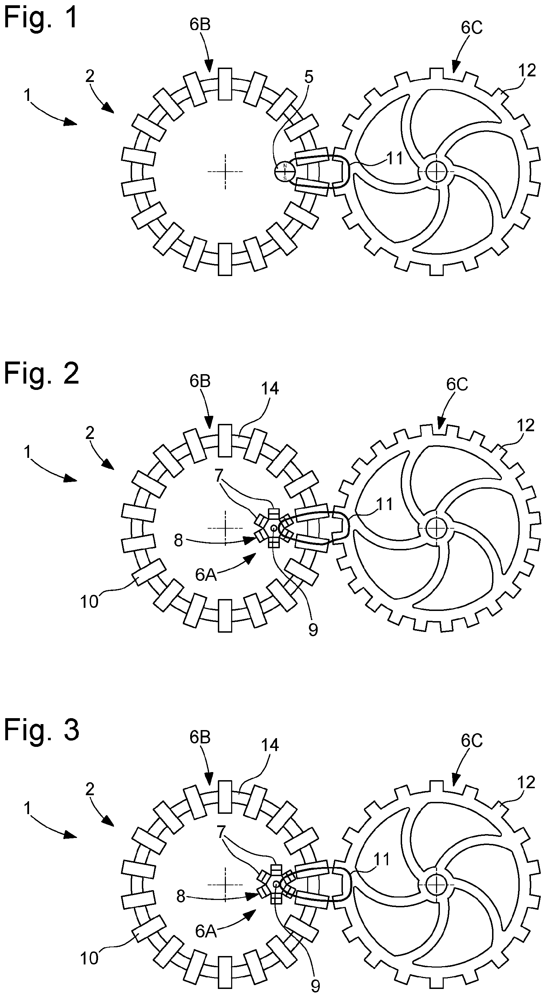

Sur la figure 1 est représenté une variante particulière du mécanisme 1 selon l'invention, du type horloger, comprenant un engrenage magnétique 2 objet de l'invention. La présente invention procède de l'idée générale inventive qui consiste à prévoir dans l'engrenage magnétique 2 deux roues 6B, 6C munies chacune de dents en matériau ferromagnétique doux, de préférence à relativement haute perméabilité magnétique, avec au moins une de ces deux roues 6B, 6C qui est couplée magnétiquement à une autre roue, de plus petit diamètre et en particulier ayant des dimensions propres à un pignon, munie de pôles magnétiques permanents 7 qui sont agencés circulairement autour de son axe de rotation. Sur la figure 1, cette autre roue est formée par un simple élément rotatif 5 présentant une aimantation permanente, lequel est un aimant bipolaire rotatif 5 en forme de disque avec un axe de rotation central perpendiculaire à l'axe magnétique de cet aimant bipolaire. L'aimant bipolaire rotatif 5 produit un champ magnétique couplé à deux parties respectives des roues 6B, 6C qui sont situées dans une zone de couplage magnétique entre les deux roues 6B, 6C correspondant à la zone d'engrènement magnétique de ces deux roues 6B, 6C.

Le champ magnétique généré par l'aimant bipolaire rotatif 5 produit une aimantation locale et temporaire sur chacune des deux roues 6B, 6C, plus précisément dans les dents en matériau ferromagnétique doux de ces roues 6B, 6C qui sont actives à un instant donné, c'est-à-dire se trouvant momentanément dans la zone d'engrènement magnétique qui correspond par définition à la zone de couplage magnétique prévue entre ces deux roues 6B, 6C. Le nombre de pôles magnétiques permanents de la roue schématisée par l'élément rotatif 5, qui sont nécessaires pour générer une telle aimantation locale, est par conséquent substantiellement réduit, au minimum à deux pôles magnétiques formant un aimant bipolaire. Les deux roues 6B, 6C sont agencées de manière telle que les dents de la roue 6B et les dents de la roue 6C présentent, en partie et successivement par groupes de dents adjacentes, un couplage magnétique direct entre elles dans la zone d'engrènement magnétique, ce couplage magnétique direct étant induit par les pôles magnétiques permanents 7 de la petite roue 5, via les dents de la roue 6B magnétisées par ces pôles magnétiques permanents 7. Ainsi, lorsque l'une des deux roues 6B, 6C ou la petite roue 5 est entraînée en rotation, les autres deux roues sont aussi entraînées en rotation grâce au couplage magnétique, en attraction, entre des dents de ces trois roues 5, 6B, 6C dans la zone d'engrènement magnétique prévue pour ces trois roues 5, 6B, 6C. Afin d'éviter une fuite du champ magnétique sur des lignes de champ non représentées sur la figure 1, la distance entre deux dents adjacentes de la roue 6B est avantageusement prévue pour être supérieure au double de la distance la plus courte séparant les dentures respectives des deux roues 6B, 6C. Les lignes 11 du champ magnétique produit par le couplage magnétique entre les trois roues 5, 6B, 6C sont alors contenues localement à proximité de l'endroit où le transfert de couple se produit entre les roues 6B et 6C.

Dans la suite de la description, les éléments désignés par des mêmes références numériques sont analogues. Sans que cela ne soit limitatif dans le cadre de la présente invention, le mécanisme 1 est de préférence un mécanisme horloger.

Comme illustré sur les figures 2 à 7, l'engrenage magnétique 2 comporte au moins trois roues 6A, 6B, 6C. De manière générale, une première roue 6A, plus petite en diamètre que les deux autres roues 6B, 6C, est munie de N1 pôles magnétiques permanents 7 qui sont agencés circulairement et définissent une première denture magnétique 8. Les N1 pôles magnétiques permanents 7 forment les dents aimantées de la première denture magnétique 8 desquelles sortent respectivement des premiers flux magnétiques ayant des polarités alternées. Comme les pôles magnétiques 7 sont agencés de manière circulaire avec une polarisation alternée, leur nombre est un nombre pair. De préférence, le nombre N1 est un nombre pair entre quatre et dix, y compris. Aux figures 2 à 6, les pôles magnétiques extérieurs 7 de la première roue 6A, associés à autant de pôles magnétiques intérieurs, forment ainsi des aimants bipolaires, avec une polarisation radiale, qui définissent respectivement les dents aimantées de la première denture magnétique 8.

Une deuxième roue 6B est munie de N2 dents en matériau ferromagnétique doux définissant une deuxième denture magnétique 10. La deuxième denture magnétique 10 est agencée sur une jante 14 en matériau non magnétique, avec des zones non magnétiques entre les dents de la deuxième denture 10. Le nombre N2 de dents de la deuxième roue 6B est supérieur au nombre N1 de pôles magnétiques 7 de la première roue 6A. Le rapport entre le nombre N2 de dents de la deuxième roue 6B et le nombre N1 de pôles magnétiques 7 de la première roue 6A est avantageusement supérieur ou égal à deux, de préférence supérieur ou égal à trois. La deuxième denture magnétique 10 présente un premier couplage magnétique direct avec la première denture magnétique 8 de sorte que, lorsqu'une des première et deuxième roues 6A, 6B est entraînée en rotation, l'autre roue 6A, 6B est également entraînée en rotation, avec un rapport de transmission défini par les première et deuxième dentures 8, 10, par le premier couplage magnétique direct entre ces première et deuxième dentures 8, 10. Ce premier couplage magnétique direct est généré, au moins en majeure partie, par des flux magnétiques parmi les premiers flux magnétiques sortant de la première denture 8 qui polarisent momentanément, en attraction magnétique, des dents de la deuxième denture magnétique 10 qui sont momentanément situées dans une zone de couplage magnétique avec la première denture magnétique et alors traversées respectivement par ces flux magnétiques.

Une troisième roue 6C est munie de N3 dents en matériau ferromagnétique doux définissant une troisième denture magnétique 12. Sans que cela ne soit limitatif dans le cadre de la présente invention, le diamètre des deuxième et troisième roues 6B, 6C est identique. Le nombre N3 de dents de la troisième roue 6C est supérieur au nombre N1 de pôles magnétiques 7 de la première roue 6A. Le rapport entre le nombre N3 de dents de la troisième roue 6C et le nombre N1 de pôles magnétiques 7 de la première roue 6A est avantageusement supérieur ou égal à deux, de préférence supérieur ou égal à trois. La troisième roue 6C est disposée relativement à la deuxième roue 6B de manière que la troisième denture magnétique 12 présente un deuxième couplage magnétique direct, dans le prolongement de la zone de couplage magnétique entre les première et deuxième dentures 8, 10, avec des dents momentanément magnétisées de la deuxième denture magnétique 10. De cette manière, lorsque l'une des deuxième et troisième roues 6B, 6C est entraînée en rotation, l'autre roue 6B, 6C est également entraînée en rotation, avec un rapport de transmission défini par les deuxième et troisième dentures magnétiques 10, 12, par le deuxième couplage magnétique direct entre ces deuxième et troisième dentures 10, 12. Ce deuxième couplage magnétique direct est généré, au moins en partie, par des deuxièmes flux magnétiques sortant respectivement des dents momentanément magnétisées de la deuxième denture magnétique 10 avec des polarités alternées, ces dents ayant été elles-mêmes magnétisées momentanément par les pôles magnétiques permanents 7 de la première roue 6A, via le premier couplage magnétique direct. Ces deuxièmes flux magnétiques polarisent alors momentanément, en attraction magnétique, des dents de la troisième denture magnétique 12 qui sont momentanément situées dans la zone de couplage magnétique entre les première, deuxième et troisième roues et traversées respectivement par les deuxièmes flux magnétiques.

Les dents des deuxième et troisième roues 6B, 6C sont constituées d'un matériau ferromagnétique doux, de préférence à haute perméabilité magnétique, tel que par exemple du Mu-métal.

De préférence, et comme illustré sur les figures 2 à 7, la première roue 6A est disposée, en projection dans un premier plan P1 dans lequel s'étend la deuxième roue 6B et perpendiculaire à l'axe de rotation de cette deuxième roue 6B, à l'intérieur d'un cercle circonscrit à cette deuxième roue 6B. Les deuxième et troisième roues 6B, 6C peuvent s'étendre dans un même plan général, ou dans des plans distincts, parallèles ou non. Lorsque les deuxième et troisième roues 6B, 6C s'étendent dans des plans distincts sensiblement parallèles entre eux, les deuxième et troisième dentures magnétiques 10, 12 sont de préférence au moins partiellement superposées dans la zone de couplage magnétique avec la première denture magnétique 10. Les première, deuxième et troisième roues 6A, 6B, 6C sont agencées de sorte que leurs dentures magnétiques 8, 10, 12 ne se touchent pas.

En référence aux figures 2, 3 et 6, on décrira ci-après un premier mode de réalisation préférentiel du mécanisme 1 comprenant un engrenage magnétique 2 selon l'invention. Selon ce mode de réalisation préférentiel du mécanisme 1, l'engrenage magnétique 2 comporte les trois roues 6A, 6B, 6C. Les dents aimantées 7 de la première denture 8 sont agencées de manière que les premiers flux magnétiques sortent de ces dents aimantées 7 avec une direction principale qui est radiale relativement à l'axe de rotation de la première roue 6A, les aimants bipolaires définissant les dents aimantées ayant ainsi une polarisation / aimantation radiale. Les premier et deuxième couplages magnétiques sont entièrement générés par des premiers flux magnétiques sortant des pôles magnétiques permanents extérieurs 7 de la première roue 6A. Les pôles magnétiques permanents 7 sont typiquement agencés par paires respectivement avec autant de pôles magnétiques complémentaires autour d'une partie centrale 9 formant axe de la première roue 6A ou dans une ouverture de laquelle passe un tel axe, la partie centrale 9 étant constituée avantageusement d'un matériau ferromagnétique ou d'un matériau en mu-métal. De préférence, comme illustré sur les figures 2, 3 et 6, la première roue 6A est montée libre en rotation sur son axe.

Dans un premier exemple du premier mode de réalisation préférentiel du mécanisme 1, illustré sur la figure 2, la première roue 6A est disposée sensiblement dans le premier plan P1, à l'intérieur de la deuxième roue 6B. La deuxième roue 6B forme alors une sorte de blindage pour la première roue 6A. La deuxième roue 6B présente une forme annulaire sans rayon dans le premier plan P1. La première roue 6A comprend six aimants bipolaires présentant une aimantation radiale et formant respectivement les dents aimantées de la première denture magnétique 8. La deuxième roue 6B comprend dix-huit dents en matériau ferromagnétique doux formant la deuxième denture magnétique 10. La troisième roue 6C comprend une jante annulaire en matériau non magnétique, typiquement en matériau ferromagnétique doux, définissant à son pourtour extérieur vingt-quatre dents en matériau ferromagnétique doux formant la troisième denture magnétique 12. Cette jante annulaire forme une base circulaire continue pour la troisième denture magnétique 12. Cette variante de réalisation permet de compenser efficacement le décalage de rotation entre les deuxième et troisième roues 6B, 6C, améliorant ainsi l'efficacité de l'engrenage magnétique 2, car le nombre N3 de dents de la troisième roue 6C est supérieur au nombre N2 de dents de la deuxième roue 6B. De manière plus générale, dans ce premier exemple du premier mode de réalisation préférentiel, les deuxième et troisième dentures magnétiques 10, 12 présentent des pas de denture différents. Le pas d'une denture 10, 12 est défini comme la longueur de l'arc de cercle entre deux dents adjacentes de cette denture 10, 12 sur un cercle de roulement avec une roue dentée engrenant avec cette denture 10, 12. De préférence, en espaçant de manière optimale les dents de la deuxième roue 6B et de la troisième roue 6C, on obtient un transfert de couple optimal entre ces roues 6B, 6C.

Selon un deuxième exemple de réalisation du premier mode de réalisation préférentiel du mécanisme 1, illustré à la figure 3, la première roue 6A comprend six aimants bipolaires présentant une aimantation radiale et formant respectivement les dents aimantées de la première denture magnétique 8. La deuxième roue 6B comprend dix-huit dents en matériau ferromagnétique doux formant la deuxième denture magnétique 10. La troisième roue 6C comprend une jante annulaire en matériau non magnétique, typiquement en matériau ferromagnétique doux, définissant à son pourtour extérieur également dix-huit dents en matériau ferromagnétique doux formant la troisième denture magnétique 12.

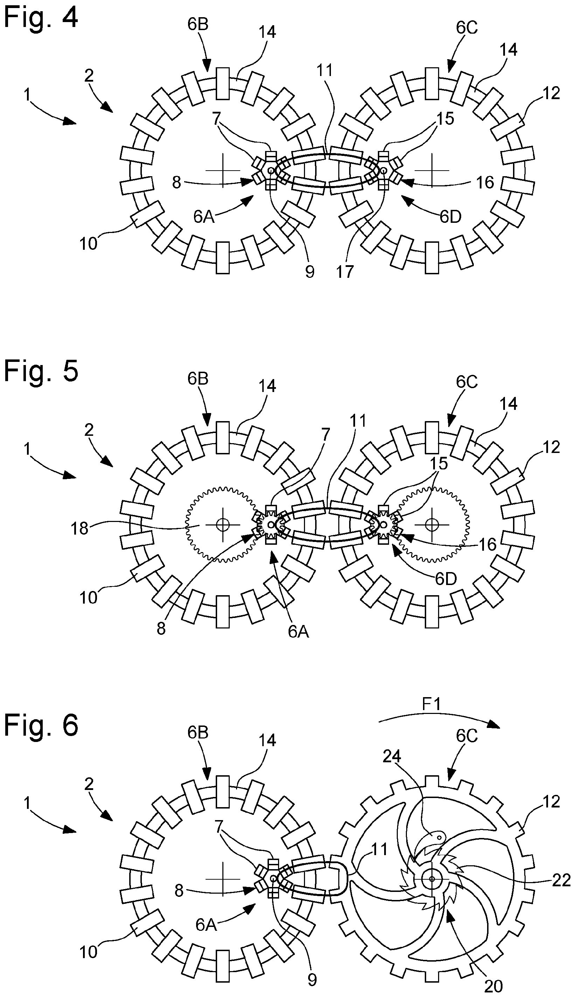

Selon un troisième exemple de réalisation du premier mode de réalisation préférentiel du mécanisme 1, illustré à la figure 6, le mécanisme 1 comporte en outre un dispositif anti-retour 20 couplé mécaniquement à la troisième roue 6C. Selon l'exemple de réalisation particulier représenté sur la figure 6, le dispositif anti-retour 20 comporte typiquement une roue à rochet 22 et un cliquet 24. La roue à rochet 22 est solidaire en rotation de la troisième roue 6C, et est munie de dents qui s'étendent radialement par rapport à l'axe de rotation de la roue 22. Le cliquet 24 coopère avec les dents de la roue à rochets 22 de manière à empêcher toute rotation de la troisième roue 6C dans la direction opposée à la direction correspondant au transfert de couple souhaité, en l'occurrence dans la direction matérialisée par la flèche F1 dans l'exemple de réalisation de la figure 6. Ceci permet d'empêcher que la troisième roue 6C vienne à tourner librement dans le sens de cette flèche F1 en cas de vibration, choc, ou toute autre perturbation mécanique au sein du mécanisme horloger (enroulement d'un ressort par exemple), ce qui pourrait être préjudiciable à l'intégrité mécanique de ce dernier. Bien que la présence de cette caractéristique ait été illustrée en référence au premier mode de réalisation préférentiel du mécanisme 1, elle peut être tout aussi bien envisagée pour n'importe quelle autre mode de réalisation du mécanisme 1 selon l'invention.

En référence aux figures 4 et 5, on décrira ci-après un deuxième mode de réalisation avantageux du mécanisme 1 comprenant un engrenage magnétique 2 selon l'invention. Selon ce deuxième mode de réalisation du mécanisme 1, l'engrenage magnétique 2 comporte, en plus des trois roues 6A, 6B, 6C, une quatrième roue 6D. La quatrième roue 6D est plus petite en diamètre que les deuxièmes et troisièmes roues 6B, 6C, et est munie de N4 pôles magnétiques permanents extérieurs 15 agencés circulairement et qui définissent une quatrième denture magnétique 16. Les N4 pôles magnétiques permanents 15 forment les dents aimantées de la quatrième denture magnétique 16 desquelles sortent respectivement des troisièmes flux magnétiques ayant des polarités alternées. Comme les pôles magnétiques 15 sont agencés de manière circulaire avec une polarisation alternée, leur nombre est un nombre pair. De préférence, comme pour la première roue 6A, le nombre N4 est un nombre pair entre quatre et dix, y compris. En particulier, les première et quatrième roues sont identiques ou similaires, avec N1 = N4.

Les pôles magnétiques extérieurs 15 sont typiquement agencés par paires respectivement avec autant de pôles magnétiques intérieurs (pôles magnétiques complémentaires), formant ainsi une pluralité d'aimants bipolaires présentant une polarisation radiale et agencés autour d'une partie centrale 17 formant axe de la quatrième roue 6D, ou dans une ouverture de laquelle passe un axe. La partie centrale 17 est constituée avantageusement d'un matériau ferromagnétique ou d'un matériau en mu-métal. Le nombre N2 de dents de la deuxième roue 6B et le nombre N3 de dents de la troisième roue 6C est supérieur au nombre N4 de pôles magnétiques 15 de la quatrième roue 6D. Dans le deuxième mode de réalisation, la troisième denture magnétique 12 est agencée, comme la deuxième denture, sur une jante 14 en matériau non magnétique, avec des zones non magnétiques entre les dents de cette troisième denture. Les dents aimantées 15 de la quatrième denture 16 sont agencées de manière que les troisièmes flux magnétiques sortent de ces dents aimantées avec une direction principale qui est radiale relativement à l'axe de rotation de la quatrième roue 6D, les aimants bipolaires ayant ainsi une polarisation / aimantation radiale. Le troisième couplage magnétique entre la quatrième roue et la troisième roue est généré en majeure partie par des troisièmes flux magnétiques sortant des dents aimantées 15.

La troisième denture magnétique 12 présente un troisième couplage magnétique avec la quatrième denture magnétique 16, de sorte que, lorsqu'une des troisième et quatrième roues 6C, 6D est entraînée en rotation, l'autre roue 6C, 6D est également entraînée en rotation, avec un rapport de transmission défini par les troisième et quatrième dentures magnétiques par le troisième couplage magnétique. Ce troisième couplage magnétique est généré, en majeure partie, par des flux magnétiques parmi les troisièmes flux magnétiques générés par la quatrième denture 16 qui polarisent momentanément, en attraction magnétique, des dents de la troisième denture magnétique 12 qui sont momentanément situées dans une zone de couplage magnétique avec la quatrième denture magnétique 16 et alors traversées respectivement par ces troisièmes flux magnétiques. Comme visible sur les figures 4 et 5, la quatrième roue 6D est agencée de manière que la zone de couplage magnétique avec la première roue 6A et la zone de couplage magnétique avec la quatrième roue 6D se superposent au moins en majeure partie et que les deuxième et troisième flux magnétiques, qui alors traversent de mêmes dents de la troisième denture 12 situées dans une zone de couplage magnétique commune aux première et quatrième roues 6A, 6D, présentent une même polarité dans chacune de ces dents. Le deuxième couplage magnétique entre les deuxième et troisième dentures magnétiques 10, 12 est alors en outre généré en partie par des quatrièmes flux magnétiques sortant respectivement de dents de la troisième denture magnétique 12 momentanément magnétisées par les troisièmes flux magnétiques sortant de la quatrième denture magnétique 16. Plus précisément, le deuxième couplage magnétique est généré sensiblement à part égale, à cause de la symétrie du système, par les deuxièmes flux magnétiques (engendrés par des premiers flux magnétiques fournis par la première denture à aimants permanents) et par les quatrièmes flux magnétiques (engendrés par des troisièmes flux magnétiques fournis par la quatrième denture magnétique à aimants permanents). Ces quatrièmes flux magnétiques polarisent en outre en partie momentanément, en attraction magnétique, respectivement des dents de la deuxième denture magnétique 10 qui sont momentanément situées dans la zone de couplage magnétique avec la quatrième roue 6D.

De préférence, la quatrième roue 6D est disposée, en projection dans un deuxième plan dans lequel s'étend la troisième roue 6C et perpendiculaire à l'axe de rotation de cette troisième roue 6C, à l'intérieur d'un cercle circonscrit à cette troisième roue 6C. De préférence, la quatrième roue 6D est montée libre en rotation sur son axe. De préférence encore, le diamètre des première et quatrième roues 6A, 6D est identique.

Dans un premier exemple du deuxième mode de réalisation du mécanisme 1, illustré sur la figure 4, la quatrième roue 6D est disposée sensiblement dans le deuxième plan dans lequel s'étend la troisième roue 6C, à l'intérieur de la troisième roue 6C. La troisième roue 6C forme alors une sorte de blindage pour la quatrième roue 6D. Selon cet exemple de réalisation, la troisième roue 6C présente une forme annulaire sans rayon dans le deuxième plan. Chacune des première et quatrième roue 6A, 6D comprend six aimants bipolaires présentant une aimantation radiale. Les six aimants bipolaires de la première roue 6A, respectivement de la quatrième roue 6D, forment la première denture magnétique 8, respectivement la quatrième denture magnétique 16. Les première et quatrième roues 6A, 6D sont avantageusement montées libres en rotation sur leurs axes respectifs. Les dents aimantées 15 de la quatrième denture 16 sont agencées de manière que les troisièmes flux magnétiques sortent de ces dents aimantées 15 avec une direction principale qui est radiale relativement à l'axe de rotation de la quatrième roue 6D, les aimants bipolaires ayant ainsi une polarisation ou aimantation radiale. Les deuxième et troisième roues 6B, 6C comprennent chacune dix-huit dents en matériau ferromagnétique doux.

Un deuxième exemple du deuxième mode de réalisation du mécanisme 1, illustré sur la figure 5, se distingue du premier exemple par le fait que la première roue 6A, respectivement la quatrième roue 6D, est couplée mécaniquement à la deuxième roue 6B, respectivement à la troisième roue 6C, via un engrenage mécanique respectif 18 du mécanisme 1. Bien que la présence de cette caractéristique ait été illustrée en référence au deuxième mode de réalisation du mécanisme 1, elle peut être tout aussi bien envisagée pour n'importe quelle autre mode de réalisation du mécanisme 1 selon l'invention. On notera que les nombres de dents respectives des deuxième et troisième dentures magnétiques peuvent être différents et que, comme dans le premier mode de réalisation, le pas des dents de la deuxième denture magnétique et le pas des dents de la troisième denture magnétique peuvent avantageusement être un peu différents.

Selon un autre exemple du deuxième mode de réalisation du mécanisme 1, non représenté sur les figures, la quatrième roue 6D est disposée hors du deuxième plan avec son axe de rotation agencé perpendiculairement à ce deuxième plan. Les troisième et quatrième roues 6C, 6D s'étendent ainsi dans des plans différents, parallèles entre eux. Les dents aimantées 15 de la quatrième denture 16 sont alors agencées de manière que les troisièmes flux magnétiques sortent de ces dents aimantées 15 avec une direction principale oblique ou parallèle à l'axe de rotation de la quatrième roue 6D. La quatrième roue 6D peut typiquement être agencée au-dessus ou en-dessous de la troisième roue 6C, de manière que leurs deux dentures respectives 12, 16 présentent, en projection dans le plan, des cercles circonscrits avec un point de contact (tangents l'un à l'autre avec l'un dans l'autre), ou éventuellement avec un léger retrait.

Selon un autre exemple du deuxième mode de réalisation du mécanisme 1, non représenté sur les figures, la quatrième roue 6D est disposée hors du deuxième plan avec son axe de rotation agencé de manière oblique par rapport à ce deuxième plan. Les dents aimantées 15 de la quatrième denture 16 sont alors agencées de manière que les troisièmes flux magnétiques sortent de ces dents aimantées 15 avec une direction principale radiale relativement à l'axe de rotation de la quatrième roue 6D.

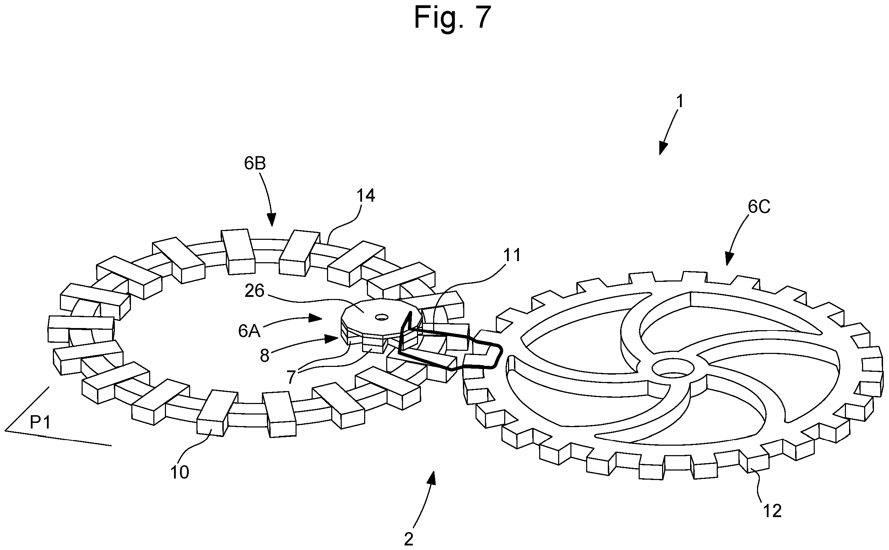

En référence à la figure 7, on décrira ci-après un troisième mode de réalisation particulier du mécanisme 1 comprenant un engrenage magnétique 2 selon l'invention. Selon ce troisième mode de réalisation du mécanisme 1, l'engrenage magnétique 2 comporte les trois roues 6A, 6B, 6C. La première roue 6A est disposée hors du premier plan P1, dans lequel s'étend la deuxième roue 6B, avec son axe de rotation agencé perpendiculairement à ce premier plan P1. Les première et deuxième roues 6A, 6B s'étendent ainsi dans des plans différents, parallèles entre eux. Les dents aimantées 7 de la première denture 8 sont agencées de manière que les premiers flux magnétiques sortent de ces dents aimantées 7 avec une direction principale axiale, c'est-à-dire parallèle à l'axe de rotation de la première roue 6A, les aimants bipolaires 7 ayant ainsi une polarisation ou aimantation axiale. La première roue 6A est en effet agencée au-dessus de la deuxième roue 6B, de manière que leurs deux dentures respectives 8, 10 soient partiellement superposées, les aimants bipolaires 7 qui génèrent momentanément les premier et deuxième couplages magnétiques étant superposés à la deuxième denture et situés à relativement petite distance de cette deuxième denture. Les premier et deuxième couplages magnétiques sont entièrement générés par des premiers flux magnétiques sortant des pôles magnétiques permanents extérieurs 7 de la première roue 6A. Une ligne 11 du champ magnétique produit par deux aimants adjacents de la première roue et générant substantiellement le couplage magnétique entre les trois roues 6A, 6B, 6C sont représentées sur la figure 7. De préférence, la première roue 6A est montée libre en rotation.

Les pôles magnétiques inférieurs 7 sont typiquement agencés par paires respectivement avec autant de pôles magnétiques supérieurs (pôles magnétiques complémentaires) sous un disque supérieur 26 monté sur la première roue 6A, le disque supérieur 26 étant constitué avantageusement d'un matériau ferromagnétique ou d'un matériau en mu-métal. Le disque supérieur 26 de la première roue 6A permet ainsi la fermeture des flux magnétiques des aimants du côté opposé à la deuxième denture magnétique.

Différentes possibilités existent pour agencer les première et deuxième roues 6A, 6B dans des plans différents, parallèles entre eux. Par exemple, une première possibilité consiste à utiliser une platine dans laquelle est ménagé un évidement circulaire. La platine définit ainsi deux niveaux : un niveau supérieur sur lequel peut être disposée une des deux roues 6A, 6B, de préférence la deuxième roue 6B ; et un niveau inférieur dans le fond de l'évidement sur lequel peut être disposée l'autre roue 6A, 6B, de préférence la première roue 6A. En variante, le fond de l'évidement peut comprendre un dispositif permettant de maintenir la première roue 6A dans cet évidement. Dans ce dernier cas, la deuxième roue 6B peut présenter dans le plan P1 des rayons reliés à un arbre. Une autre possibilité consiste à utiliser un anneau, du type anneau de quantième, posé dans une gorge, et conduit en rotation par cette gorge.

Selon un autre mode de réalisation du mécanisme 1, non représenté sur les figures, l'engrenage magnétique 2 comporte les trois roues 6A, 6B, 6C. La première roue 6A est disposée hors du premier plan P1 avec son axe de rotation agencé perpendiculairement à ce premier plan P1. Les première et deuxième roues 6A, 6B s'étendent ainsi dans des plans différents, parallèles entre eux. Les dents aimantées 7 de la première denture 8 sont agencées de manière que les premiers flux magnétiques sortent de ces dents aimantées 7 avec une direction principale oblique par rapport à l'axe de rotation de la première roue 6A. Dans ce dernier cas, la première roue 6A est alors agencée un peu en retrait de la deuxième denture de la deuxième roue 6B, par exemple de manière que leurs deux dentures respectives 8, 10 présentent, en projection dans le plan P1, respectivement un cercle circonscrit et un cercle inscrit qui se touchent sensiblement en un point.

Selon un autre mode de réalisation du mécanisme 1, non représenté sur les figures, l'engrenage magnétique 2 comporte les trois roues 6A, 6B, 6C. La première roue 6A est disposée hors du premier plan P1 avec son axe de rotation agencé de manière oblique par rapport à ce premier plan P1. Les première et deuxième roues 6A, 6B s'étendent ainsi dans des plans différents et qui forment un angle entre eux. Les dents aimantées 7 de la première roue 6A sont alors avantageusement agencées de manière que les premiers flux magnétiques sortent de ces dents aimantées 7 avec une direction principale radiale relativement à l'axe de rotation de la première roue 6A. Les premier et deuxième couplages magnétiques sont entièrement générés par des premiers flux magnétiques sortant des pôles magnétiques permanents extérieurs 7 de la première roue 6A.

Dans une variante générale, il est prévu que l'une des deuxième et troisième roues soit entraînée en rotation par un dispositif d'entraînement et soit ainsi entraîneuse dans l'engrenage magnétique, et l'autre de ces deux roues est entrainée pour effectuer une fonction du mécanisme ou pour transmettre un couple de force dans ce mécanisme. La première roue et, le cas échéant, la quatrième roue sont montées libres en rotation ou couplées mécaniquement seulement et respectivement aux deuxième et troisième roues.

## Revendications

1. Mécanisme (1), du type horloger, comprenant un engrenage magnétique (2) comportant une première roue (6A) et une deuxième roue (6B), la première roue (6A) étant munie de pôles magnétiques permanents (7) qui sont agencés de manière à former les dents aimantées d'une première denture magnétique (8) desquelles sortent respectivement des premiers flux magnétiques ayant des polarités alternées, la deuxième roue étant munie de dents en matériau ferromagnétique doux définissant une deuxième denture magnétique (10), cette deuxième denture magnétique (10) ayant un nombre de dents supérieur à celui de la première denture magnétique (8) et présentant un premier couplage magnétique avec cette première denture magnétique (8) de sorte que, lorsqu'une des première et deuxième roues (6A, 6B) est entraînée en rotation, l'autre roue est également entraînée en rotation, avec un premier rapport de transmission défini par les première et deuxième dentures magnétiques, par ledit premier couplage magnétique qui est généré, au moins en majeure partie, par des flux magnétiques, parmi lesdits premiers flux magnétiques, polarisant momentanément, en attraction magnétique, des dents de la deuxième denture magnétique (10) qui sont momentanément situées dans une zone de couplage magnétique avec la première denture magnétique (8) et alors traversées respectivement par ces flux magnétiques ; **caractérisé en ce que** l'engrenage magnétique (2) comprend en outre une troisième roue (6C) munie de dents en matériau ferromagnétique doux définissant une troisième denture magnétique (12) ayant également un nombre de dents supérieur à celui de la première denture magnétique (8), la deuxième denture magnétique (10) étant agencée sur une jante en matériau non magnétique avec des zones non magnétiques entre les dents de cette deuxième denture, la troisième roue (6C) étant disposée relativement à la deuxième roue (6B) de manière que la troisième denture magnétique (12) présente un deuxième couplage magnétique, dans ladite zone de couplage magnétique, avec des dents momentanément magnétisées de la deuxième denture magnétique (10), de sorte que, lorsque l'une des deuxième et troisième roues (6B, 6C) est entraînée en rotation, l'autre roue est également entraînée en rotation, avec un deuxième rapport de transmission défini par les deuxième et troisième dentures magnétiques, par ledit deuxième couplage magnétique qui est généré, au moins en partie, par des deuxièmes flux magnétiques sortant respectivement desdites dents momentanément magnétisées de la deuxième denture magnétique (10) avec des polarités alternées, ces deuxièmes flux magnétiques polarisant momentanément, en attraction magnétique, des dents de la troisième denture magnétique (12) qui sont momentanément situées dans ladite zone de couplage magnétique et alors traversées respectivement par les deuxièmes flux magnétiques, cette zone de couplage magnétique définissant une zone d'engrènement magnétique pour les première, deuxième et troisième roues.

2. Mécanisme (1) selon la revendication 1, dans lequel la première denture magnétique (8) comprend N1 dents, la deuxième denture magnétique (10) comprend N2 dents, et la troisième denture magnétique (12) comprend N3 dents ; **caractérisé en ce que** le nombre N1 est un nombre pair entre quatre et dix, y compris ; et **en ce que** le rapport entre le nombre N2 et le nombre N1 et le rapport entre le nombre N3 et le nombre N1 sont chacun supérieur ou égal à deux, de préférence supérieur ou égal à trois.

3. Mécanisme (1) selon la revendication 1 ou 2, **caractérisé en ce que** la première roue (6A) est en outre couplée mécaniquement à la deuxième roue (6B), notamment via un train d'engrenages (18).

4. Mécanisme (1) selon la revendication 1 ou 2, **caractérisé en ce que** la première roue (6A) est montée libre en rotation.

5. Mécanisme (1) selon l'une quelconque des revendications précédentes, **caractérisé en ce que** la première roue (6A) est disposée, en projection dans un premier plan (P1) dans lequel s'étend la deuxième roue (6B) et perpendiculaire à l'axe de rotation de cette deuxième roue (6B), à l'intérieur d'un cercle circonscrit à cette deuxième roue (6B).

6. Mécanisme (1) selon la revendication 5, **caractérisé en ce que** la première roue (6A) est disposée sensiblement dans ledit premier plan (P1), à l'intérieur de la deuxième roue (6B) qui présente une forme annulaire sans rayon dans le premier plan (P1), les dents aimantées (7) de la première denture (8) étant agencées de manière que les premiers flux magnétiques sortent de ces dents aimantées (7) avec une direction principale radiale relativement à l'axe de rotation de la première roue (6A).

7. Mécanisme (1) selon la revendication 5, **caractérisé en ce que** la première roue (6A) est disposée hors du premier plan (P1) avec son axe de rotation agencé perpendiculairement à ce premier plan (P1), les dents aimantées (7) de la première denture (8) étant agencées de manière que les premiers flux magnétiques sortent de ces dents aimantées (7) avec une direction principale oblique ou parallèle à l'axe de rotation de la première roue (6A).

8. Mécanisme (1) selon la revendication 5, **caractérisé en ce que** la première roue (6A) est disposée hors du premier plan (P1) avec son axe de rotation agencé de manière oblique par rapport à ce premier plan (P1), les dents aimantées (7) de la première denture (8) étant agencées de manière que les premiers flux magnétiques sortent de ces dents aimantées (7) avec une direction principale radiale relativement à l'axe de rotation de la première roue (6A).

9. Mécanisme (1) selon l'une quelconque des revendications précédentes, **caractérisé en ce que** la première roue présente une partie centrale (9) en matériau ferromagnétique, en périphérie de laquelle sont agencés par paires ses dits pôles magnétiques permanents (7) avec respectivement autant de pôles magnétiques complémentaires, formant ainsi des aimants bipolaires qui définissent respectivement lesdites dents aimantées de la première denture magnétique.

10. Mécanisme (1) selon l'une quelconque des revendications précédentes, **caractérisé en ce que** les deuxième et troisième dentures magnétiques (10, 12) présentent des pas différents, le pas d'une denture étant défini comme la longueur de l'arc de cercle entre deux dents adjacentes de cette denture sur un cercle de roulement avec une roue dentée engrenant avec cette denture.

11. Mécanisme (1) selon l'une quelconque des revendications précédentes, **caractérisé en ce qu'**il comporte en outre un dispositif anti-retour (20) couplé mécaniquement à la troisième roue (6C).

12. Mécanisme (1) selon l'une quelconque des revendications précédentes, **caractérisé en ce que** la troisième roue (6C) comprend une jante, formant une base circulaire continue pour la troisième denture magnétique (12), qui est constituée d'un matériau ferromagnétique doux, de sorte à former une fermeture pour des chemins magnétiques desdits deuxièmes flux magnétiques.

13. Mécanisme (1) selon l'une quelconque des revendications 5 à 8 et des revendications 9 à 12 lorsqu'elles dépendent de l'une quelconque de ces revendications 5 à 8, **caractérisé en ce que** l'engrenage magnétique (2) comprend en outre une quatrième roue (6D) munie de pôles magnétiques permanents (15) qui sont agencés de manière à former les dents aimantées d'une quatrième denture magnétique (16) desquelles sortent respectivement des troisièmes flux magnétiques ayant des polarités alternées ; **en ce que** la troisième denture magnétique (12) est agencée sur une jante en matériau non magnétique avec des zones non magnétiques entre les dents de la troisième denture (12), ladite quatrième roue (6D) étant disposée, en projection dans un deuxième plan dans lequel s'étend la troisième roue (6C) et perpendiculaire à l'axe de rotation de cette troisième roue (6C), à l'intérieur d'un cercle circonscrit à cette troisième roue (6C), les deuxième et troisième dentures magnétiques (10, 12) ayant chacune un nombre de dents supérieur à celui de la quatrième denture magnétique (16) et présentant en outre un troisième couplage magnétique avec cette quatrième denture magnétique (16), de sorte que, lorsqu'une des troisième et quatrième roues (6C, 6D) est entraînée en rotation, l'autre roue est également entraînée en rotation, avec un troisième rapport de transmission défini par les troisième et quatrième dentures magnétiques (12, 16), par le troisième couplage magnétique qui est généré, en majeure partie, par des flux magnétiques, parmi lesdits troisièmes flux magnétiques, polarisant momentanément, en attraction magnétique, des dents de la troisième denture magnétique (12) qui sont momentanément situées dans une zone de couplage magnétique avec la quatrième denture magnétique (16) et alors traversées respectivement par ces flux magnétiques, la quatrième roue (6D) étant agencée de manière que ladite zone de couplage magnétique avec la première roue (6A) et la zone de couplage magnétique avec cette quatrième roue (6D) se superposent au moins en majeure partie et que les deuxième et troisième flux magnétiques, qui alors traversent des dents de la troisième denture (12) situées dans une zone de couplage magnétique commune aux première et quatrième roues (6A, 6D), présentent une même polarité dans chacune de ces dents, ledit deuxième couplage magnétique entre les deuxième et troisième dentures magnétiques (10, 12) étant en outre généré en partie par des quatrièmes flux magnétiques sortant respectivement desdites dents de la troisième denture magnétique (12) momentanément magnétisées par la quatrième denture magnétique (16), ces quatrièmes flux magnétiques polarisant en outre momentanément, en attraction magnétique, respectivement des dents de la deuxième denture magnétique (10) qui sont momentanément situées dans ladite zone de couplage magnétique avec la quatrième roue (6D).

14. Mécanisme (1) selon la revendication 13, **caractérisé en ce que** la quatrième roue (6D) présente une partie centrale (17) en matériau ferromagnétique, en périphérie de laquelle sont agencés par paires ses pôles magnétiques permanents (15) avec respectivement autant de pôles magnétiques complémentaires, formant ainsi des aimants bipolaires qui définissent lesdites dents aimantées de la quatrième denture magnétique ; et **en ce que** la quatrième roue est montée libre en rotation.

15. Mécanisme (1) selon l'une quelconque des revendications précédentes, **caractérisé en ce que** les deuxième et troisième roues (6B, 6C) sont coplanaires.

16. Mécanisme (1) selon l'une quelconque des revendications 1 à 14, **caractérisé en ce que** les deuxième et troisième roues s'étendent dans des plans distincts.

17. Mécanisme (1) selon la revendication 16, **caractérisé en ce que** lesdits plans distincts ne sont pas parallèles.

18. Mécanisme (1) selon la revendication 16, **caractérisé en ce que** lesdits plans distincts sont parallèles, les deuxième et troisième dentures magnétiques (10, 12) étant au moins partiellement superposées dans ladite zone de couplage magnétique avec la première denture magnétique (10).

## Patentansprüche

1. Mechanismus (1), vom Uhrmachereityp, der ein magnetisches Getriebe (2) umfasst, das ein erstes Rad (6A) und ein zweites Rad (6B) beinhaltet, wobei das erste Rad (6A) mit Permanentmagnetpolen (7) versehen ist, die angeordnet sind, um die magnetisierten Zähne einer ersten magnetischen Verzahnung (8) zu bilden, aus denen jeweils erste magnetische Flüsse austreten, die abwechselnde Polaritäten aufweisen, das zweite Rad mit Zähnen aus weichem ferromagnetischem Werkstoff versehen ist, die eine zweite magnetische Verzahnung (10) definieren, wobei diese zweite magnetische Verzahnung (10) eine Anzahl von Zähnen aufweist, die größer als jene der ersten magnetischen Verzahnung (8) ist, und eine erste magnetische Kopplung mit dieser ersten magnetischen Verzahnung (8) aufweist, sodass, wenn eines von dem ersten und zweiten Rad (6A, 6B) in Drehung angetrieben wird, das andere Rad ebenfalls mit einem ersten Übersetzungsverhältnis in Drehung angetrieben wird, das durch die erste und zweite magnetische Verzahnung durch die erste magnetische Kopplung definiert ist, die zumindest zum größten Teil durch magnetische Flüsse unter den ersten magnetischen Flüssen erzeugt wird, die vorübergehend Zähne der zweiten magnetischen Verzahnung (10), die sich vorübergehend in einer Zone der magnetischen Kopplung mit der ersten magnetischen Verzahnung (8) befinden, und somit jeweils von diesen magnetischen Flüssen durchquert werden, in magnetische Anziehung polarisieren; **dadurch gekennzeichnet, dass** das magnetische Getriebe (2) weiter ein drittes Rad (6C) umfasst, das mit Zähnen aus weichem ferromagnetischem Werkstoff versehen ist, die eine dritte magnetische Verzahnung (12) definieren, die ebenfalls eine Anzahl von Zähnen aufweist, die größer als jene der ersten magnetischen Verzahnung (8) ist, wobei die zweite magnetische Verzahnung (10) auf einer Felge aus nichtmagnetischem Werkstoff mit nichtmagnetischen Zonen zwischen den Zähnen dieser zweiten Verzahnung angeordnet ist, wobei das dritte Rad (6C) in Bezug zum zweiten Rad (6B) angeordnet ist, sodass die dritte magnetische Verzahnung (12) in der magnetischen Kopplungszone eine zweite magnetische Kopplung mit vorübergehend magnetisierten Zähnen der zweiten magnetischen Verzahnung (10) aufweist, sodass, wenn eines von dem zweiten und dritten Rad (6B, 6C) in Drehung angetrieben wird, das andere Rad ebenfalls mit einem zweiten Übersetzungsverhältnis in Drehung angetrieben wird, das durch die zweite und dritte magnetische Verzahnung durch die zweite magnetische Kopplung definiert ist, die zumindest teilweise durch zweite magnetische Flüsse erzeugt wird, die jeweils aus den vorübergehend magnetisierten Zähnen der zweiten magnetischen Verzahnung (10) mit abwechselnden Polaritäten austreten, wobei diese zweiten magnetischen Flüsse vorübergehend Zähne der dritten magnetischen Verzahnung (12) in magnetischer Anziehung polarisieren, die sich vorübergehend in der magnetischen Kopplungszone befinden und somit jeweils von den zweiten magnetischen Flüssen durchquert werden, wobei diese magnetische Kopplungszone eine magnetische Eingriffszone für das erste, zweite und dritte Rad definiert.

2. Mechanismus (1) nach Anspruch 1, wobei die erste magnetische Verzahnung (8) N1 Zähne umfasst, die zweite magnetische Verzahnung (10) N2 Zähne umfasst und die dritte magnetische Verzahnung (12) N3 Zähne umfasst; **dadurch gekennzeichnet, dass** die Zahl N1 eine gerade Zahl zwischen vier und einschließlich zehn ist; und dadurch, dass das Verhältnis zwischen der Zahl N2 und der Zahl N1 und das Verhältnis zwischen der Zahl N3 und der Zahl N1 jeweils größer oder gleich zwei, vorzugsweise größer oder gleich drei, sind.

3. Mechanismus (1) nach Anspruch 1 oder 2, **dadurch gekennzeichnet, dass** das erste Rad (6A) zusätzlich mechanisch mit dem zweiten Rad (6B), insbesondere über einen Train (18) gekoppelt ist.

4. Mechanismus (1) nach Anspruch 1 oder 2, **dadurch gekennzeichnet, dass** das erste Rad (6A) frei drehend montiert ist.

5. Mechanismus (1) nach einem der vorstehenden Ansprüche, **dadurch gekennzeichnet, dass** das erste Rad (6A) in Projektion auf eine erste Ebene (P1), in der sich das zweite Rad (6B) erstreckt, und senkrecht zur Drehachse dieses zweiten Rads (6B), im Inneren eines Kreises angeordnet ist, der dieses zweite Rad (6B) umschreibt.

6. Mechanismus (1) nach Anspruch 5, **dadurch gekennzeichnet, dass** das erste Rad (6A) im Wesentlichen in der ersten Ebene (P1) innerhalb des zweiten Rads (6B) angeordnet ist, das eine Ringform ohne Radius in der ersten Ebene (P1) aufweist, wobei die magnetisierten Zähne (7) der ersten Verzahnung (8) angeordnet sind, sodass die ersten magnetischen Flüsse aus diesen magnetisierten Zähnen (7) mit einer radialen Hauptrichtung in Bezug zur Drehachse des ersten Rads (6A) austreten.

7. Mechanismus (1) nach Anspruch 5, **dadurch gekennzeichnet, dass** das erste Rad (6A) außerhalb der ersten Ebene (P1) mit seiner Drehachse senkrecht zu dieser ersten Ebene (P1) angeordnet ist, wobei die magnetisierten Zähne (7) der ersten Verzahnung (8) angeordnet sind, sodass die ersten magnetischen Flüsse aus diesen magnetisierten Zähnen (7) mit einer Hauptrichtung schräg oder parallel zur Drehachse des ersten Rades (6A) austreten.

8. Mechanismus (1) nach Anspruch 5, **dadurch gekennzeichnet, dass** das erste Rad (6A) außerhalb der ersten Ebene (P1) mit seiner Drehachse schräg zu dieser ersten Ebene (P1) angeordnet ist, wobei die magnetisierten Zähne (7) der ersten Verzahnung (8) angeordnet sind, sodass die ersten magnetischen Flüsse aus diesen magnetisierten Zähnen (7) mit einer radialen Hauptrichtung in Bezug zur Drehachse des ersten Rades (6A) austreten.

9. Mechanismus (1) nach einem der vorstehenden Ansprüche, **dadurch gekennzeichnet, dass** das erste Rad einen zentralen Teil (9) aus ferromagnetischem Werkstoff aufweist, an dessen Peripherie paarweise seine Permanentmagnetpole (7) mit jeweils ebenso vielen komplementären Magnetpolen angeordnet sind, wodurch bipolare Magnete gebildet werden, die jeweils die magnetisierten Zähne der ersten magnetischen Verzahnung definieren.

10. Mechanismus (1) nach einem der vorstehenden Ansprüche, **dadurch gekennzeichnet, dass** die zweite und dritte magnetische Verzahnung (10, 12) unterschiedliche Teilungen aufweisen, wobei die Teilung einer Verzahnung als die Länge des Kreisbogens zwischen zwei benachbarten Zähnen dieser Verzahnung auf einem Rollkreis mit einem Zahnrad definiert ist, das in diese Verzahnung eingreift.

11. Mechanismus (1) nach einem der vorstehenden Ansprüche, **dadurch gekennzeichnet, dass** er weiter eine Rücklaufsperre (20) beinhaltet, die mechanisch mit dem dritten Rad (6C) gekoppelt ist.

12. Mechanismus (1) nach einem der vorstehenden Ansprüche, **dadurch gekennzeichnet, dass** das dritte Rad (6C) eine Felge umfasst, die eine durchgehende kreisförmige Basis für die dritte magnetische Verzahnung (12) bildet, die aus einem weichen ferromagnetischen Werkstoff besteht, um einen Abschluss für magnetische Pfade der zweiten magnetischen Flüsse zu bilden.

13. Mechanismus (1) nach einem der Ansprüche 5 bis 8 und den Ansprüchen 9 bis 12, wenn sie von einem dieser Ansprüche 5 bis 8 abhängen, **dadurch gekennzeichnet, dass** das magnetische Getriebe (2) weiter ein viertes Rad (6D) umfasst, das mit Permanentmagnetpolen (15) versehen ist, die angeordnet sind, um die magnetisierten Zähne einer vierten magnetischen Verzahnung (16) zu bilden, aus denen jeweils dritte magnetische Flüsse austreten, die abwechselnde Polaritäten aufweisen, dadurch, dass die dritte magnetische Verzahnung (12) auf einer Felge aus nichtmagnetischem Werkstoff mit nichtmagnetischen Zonen zwischen den Zähnen der dritten Verzahnung (12) angeordnet ist, wobei das vierte Rad (6D) in Projektion in eine zweite Ebene, in der sich das dritte Rad (6C) erstreckt, und senkrecht zur Drehachse dieses dritten Rads (6C), im Inneren eines Kreises angeordnet ist, der dieses dritte Rad (6C) umschreibt, wobei die zweite und dritte magnetische Verzahnung (10, 12) jeweils eine Anzahl an Zähnen, die größer als jene der vierten magnetischen Verzahnung (16) ist, aufweisen, und weiter eine dritte magnetische Kopplung mit dieser vierten magnetischen Verzahnung (16) aufweisen, sodass, wenn eines von dem dritten und vierten Rad (6C, 6D) in Drehung angetrieben wird, das andere Rad ebenfalls mit einem dritten Übersetzungsverhältnis, das durch die dritte und vierte magnetische Verzahnung (12, 16) durch die dritte magnetische Kopplung definiert ist, in Drehung angetrieben wird, die größtenteils durch magnetische Flüsse unter den dritten magnetischen Flüssen erzeugt wird, die Zähne der dritten magnetischen Verzahnung (12), die sich vorübergehend in einer Zone der magnetischen Kopplung mit der vierten magnetischen Verzahnung (16) befinden und somit jeweils von diesen magnetischen Flüssen durchquert werden, vorübergehend in magnetischer Anziehung polarisieren, wobei das vierte Rad (6D) angeordnet ist, sodass die Zone der magnetischen Kopplung mit dem ersten Rad (6A) und die Zone der magnetischen Kopplung mit diesem vierten Rad (6D) sich zumindest größtenteils überlagern, und dass der zweite und dritte magnetische Fluss, die somit Zähne der dritten Verzahnung (12) durchqueren, die sich in einer gemeinsamen Zone der magnetischen Kopplung des ersten und des vierten Rades (6A, 6D) befinden, eine gleiche Polarität in jedem dieser Zähne aufweisen, wobei die zweite magnetische Kopplung zwischen der zweiten und dritten magnetischen Verzahnung (10, 12) weiter teilweise durch vierte magnetische Flüsse erzeugt wird, die jeweils aus den Zähnen der dritten magnetischen Verzahnung (12) austreten, die vorübergehend durch die vierte magnetische Verzahnung (16) magnetisiert werden, wobei diese vierten magnetischen Flüsse weiter vorübergehend jeweils Zähne der zweiten magnetischen Verzahnung (10), die sich vorübergehend in der Zone der magnetischen Kopplung mit dem vierten Rad (6D) befinden, in magnetischer Anziehung polarisieren.

14. Mechanismus (1) nach Anspruch 13, **dadurch gekennzeichnet, dass** das vierte Rad (6D) einen zentralen Teil (17) aus ferromagnetischem Werkstoff aufweist, an dessen Peripherie seine Permanentmagnetpole (15) mit jeweils ebenso vielen komplementären magnetischen Polen paarweise angeordnet sind, wodurch bipolare Magnete gebildet werden, die die magnetisierten Zähne der vierten magnetischen Verzahnung definieren; und dadurch, dass das vierte Rad frei drehend montiert ist.

15. Mechanismus (1) nach einem der vorstehenden Ansprüche, **dadurch gekennzeichnet, dass** das zweite und dritte Rad (6B, 6C) komplanar sind.

16. Mechanismus (1) nach einem der Ansprüche 1 bis 14, **dadurch gekennzeichnet, dass** sich das zweite und dritte Rad in unterschiedlichen Ebenen erstrecken.

17. Mechanismus (1) nach Anspruch 16, **dadurch gekennzeichnet, dass** die unterschiedlichen Ebenen nicht parallel sind.

18. Mechanismus (1) nach Anspruch 16, **dadurch gekennzeichnet, dass** die unterschiedlichen Ebenen parallel sind, die zweite und dritte magnetische Verzahnung (10, 12) in der Zone der magnetischen Kopplung sich mit der ersten magnetischen Verzahnung (10) zumindest teilweise überlagert.

## Claims

1. A timepiece mechanism (1) comprising a magnetic gear (2) including a first wheel (6A) and a second wheel (6B), the first wheel (6A) being provided with permanent magnetic poles (7) which are arranged so as to form the magnetised teeth of a first magnetic toothing (8) from which first magnetic fluxes of alternating polarities respectively emerge, the second wheel being provided with teeth made of a soft ferromagnetic material defining a second magnetic toothing (10), the number of teeth of this second magnetic toothing (10) being greater than that of the first magnetic toothing (8), and having a first magnetic coupling with this first magnetic toothing (8) such that, when one of the first and second wheels (6A, 6B) is driven such that it rotates, the other wheel is also driven such that it rotates, with a first transmission ratio defined by the first and second magnetic toothings, by said first magnetic coupling which is generated, at least for the most part, by magnetic fluxes, from among said first magnetic fluxes, momentarily polarising, in magnetic attraction, teeth of the second magnetic toothing (10) which are momentarily located in a magnetic coupling zone with the first magnetic toothing (8) and thus through which these magnetic fluxes respectively flow; **characterised in that** the magnetic gear (2) further comprises a third wheel (6C) provided with teeth made of a soft ferromagnetic material defining a third magnetic toothing (12), the number of teeth whereof is also greater than that of the first magnetic toothing (8), the second magnetic toothing (10) being arranged on a rim made of a non-magnetic material with non-magnetic zones between the teeth of this second toothing, the third wheel (6C) being disposed relative to the second wheel (6B) in such a way that the third magnetic toothing (12) has a second magnetic coupling, in said magnetic coupling zone, with momentarily magnetised teeth of the second magnetic toothing (10), such that, when one of the second and third wheels (6B, 6C) is driven such that it rotates, the other wheel is also driven such that it rotates, with a second transmission ratio defined by the second and third magnetic toothings, by said second magnetic coupling which is generated, at least in part, by second magnetic fluxes, respectively emerging from said momentarily magnetised teeth of the second magnetic toothing (10) with alternating polarities, these second magnetic fluxes momentarily polarising, in magnetic attraction, teeth of the third magnetic toothing (12) which are momentarily located in said magnetic coupling zone and thus through which the second magnetic fluxes respectively flow, this magnetic coupling zone defining a magnetic meshing zone for the first, second and third wheels.

2. Mechanism (1) according to claim 1, wherein the first magnetic toothing (8) comprises N1 teeth, the second magnetic toothing (10) comprises N2 teeth, and the third magnetic toothing (12) comprises N3 teeth; **characterised in that** the number N1 is an even number between four and ten, inclusive; and **in that** the ratio between the number N2 and the number N1, and the ratio between the number N3 and the number N1, are each greater than or equal to two, preferably greater than or equal to three.

3. Mechanism (1) according to claim 1 or 2, **characterised in that** the first wheel (6A) is furthermore mechanically coupled to the second wheel (6B), in particular via a gear train (18).

4. Mechanism (1) according to claim 1 or 2, **characterised in that** the first wheel (6A) is mounted such that it can rotate freely.

5. Mechanism (1) according to any one of the preceding claims, **characterised in that** the first wheel (6A) is disposed, when projected on a first plane (P1) in which the second wheel (6B) extends and perpendicular to the rotational axis of this second wheel (6B), inside a circle circumscribed about this second wheel (6B).

6. Mechanism (1) according to claim 5, **characterised in that** the first wheel (6A) is disposed substantially in said first plane (P1), within the second wheel (6B) which has, in the first plane (P1), an annular shape with no crossings, the magnetised teeth (7) of the first toothing (8) being arranged such that the first magnetic fluxes emerge from these magnetised teeth (7) in a main radial direction relative to the rotational axis of the first wheel (6A).

7. Mechanism (1) according to claim 5, **characterised in that** the first wheel (6A) is disposed outside the first plane (P1) with the rotational axis thereof arranged perpendicular to this first plane (P1), the magnetised teeth (7) of the first toothing (8) being arranged such that the first magnetic fluxes emerge from these magnetised teeth (7) in a main direction that is oblique or parallel to the rotational axis of the first wheel (6A).

8. Mechanism (1) according to claim 5, **characterised in that** the first wheel (6A) is disposed outside the first plane (P1), with the rotational axis thereof arranged in an oblique manner relative to this first plane (P1), the magnetised teeth (7) of the first toothing (8) being arranged such that the first magnetic fluxes emerge from these magnetised teeth (7) in a main radial direction relative to the rotational axis of the first wheel (6A).

9. Mechanism (1) according to any one of the preceding claims, **characterised in that** the first wheel has a central part (9) made of a ferromagnetic material, on the periphery whereof its said permanent magnetic poles (7) are arranged in pairs respectively with as many complementary magnetic poles, thus forming bipolar magnets which respectively define said magnetised teeth of the first magnetic toothing.

10. Mechanism (1) according to any one of the preceding claims, **characterised in that** the second and third magnetic toothings (10, 12) have different pitches, the pitch of a toothing being defined as being the length of the arc of a circle between two adjacent teeth of this toothing on a circle of contact with a toothed wheel meshing with this toothing.

11. Mechanism (1) according to any one of the preceding claims, **characterised in that** it further includes a non-return device (20) mechanically coupled to the third wheel (6C).

12. Mechanism (1) according to any one of the preceding claims, **characterised in that** the third wheel (6C) comprises a rim forming a continuous circular base for the third magnetic toothing (12), which is made of a soft ferromagnetic material so as to form a closure closing magnetic paths of said second magnetic fluxes.

13. Mechanism (1) according to any one of claims 5 to 8 and claims 9 to 12 when dependent on any one of these claims 5 to 8, **characterised in that** the magnetic gear (2) further comprises a fourth wheel (6D) provided with permanent magnetic poles (15) which are arranged so as to form the magnetised teeth of a fourth magnetic toothing (16) from which third magnetic fluxes with alternating polarities respectively emerge; **in that** the third magnetic toothing (12) is arranged on a rim made of a non-magnetic material with non-magnetic zones between the teeth of the third toothing (12), said fourth wheel (6D) being disposed, when projected on a second plane in which the third wheel (6C) extends and perpendicular to the rotational axis of this third wheel (6C), inside a circle circumscribed about this third wheel (6C), the second and third magnetic toothings (10, 12) each having a greater number of teeth than the fourth magnetic toothing (16) and further having a third magnetic coupling with this fourth magnetic toothing (16) such that, when one of the third and fourth wheels (6C, 6D) is driven such that it rotates, the other wheel is also driven such that it rotates, with a third transmission ratio defined by the third and fourth magnetic toothings (12, 16), by the third magnetic coupling which is generated, for the most part, by magnetic fluxes, from among said third magnetic fluxes, momentarily polarising, in magnetic attraction, teeth of the third magnetic toothing (12) which are momentarily located in a magnetic coupling zone with the fourth magnetic toothing (16) and thus through which these magnetic fluxes respectively flow, the fourth wheel (6D) being arranged in such a way that said magnetic coupling zone with the first wheel (6A) and the magnetic coupling zone with this fourth wheel (6D) are at least for the most part superimposed, and that the second and third magnetic fluxes, which thus pass through teeth of the third toothing (12) located in a magnetic coupling zone that is common to the first and fourth wheels (6A, 6D), have the same polarity in each of these teeth, said second magnetic coupling between the second and third magnetic toothings (10, 12) being further generated in part by fourth magnetic fluxes respectively emerging from said teeth of the third magnetic toothing (12) momentarily magnetised by the fourth magnetic toothing (16), these fourth magnetic fluxes further momentarily polarising, in magnetic attraction, respectively teeth of the second magnetic toothing (10) which are momentarily located in said magnetic coupling zone with the fourth wheel (6D).

14. Mechanism (1) according to claim 13, **characterised in that** the fourth wheel (6D) has a central part (17) made of a ferromagnetic material, on the periphery whereof its permanent magnetic poles (15) are arranged in pairs respectively with as many complementary magnetic poles, thus forming bipolar magnets which define said magnetised teeth of the fourth magnetic toothing; and **in that** the fourth wheel is mounted such that it can rotate freely.

15. Mechanism (1) according to any one of the preceding claims, **characterised in that** the second and third wheels (6B, 6C) are coplanar.

16. Mechanism (1) according to any one of claims 1 to 14, **characterised in that** the second and third wheels extend in separate planes.

17. Mechanism (1) according to claim 16, **characterised in that** said separate planes are not parallel.

18. Mechanism (1) according to claim 16, **characterised in that** said separate planes are parallel, the second and third magnetic toothings (10, 12) being at least partially superimposed in said magnetic coupling zone with the first magnetic toothing (10).
